(19)

**Europäisches Patentamt**
**European Patent Office**
**Office européen des brevets**

(11) **EP 3 672 012 B1**

(12) **FASCICULE DE BREVET EUROPEEN**

(45) Date de publication et mention
de la délivrance du brevet:
**28.07.2021 Bulletin 2021/30**

(51) Int Cl.:
*H02J 3/38* (2006.01)   *H02J 3/48* (2006.01)
*H02J 3/50* (2006.01)

(21) Numéro de dépôt: **19211986.5**

(22) Date de dépôt: **28.11.2019**

(54) **PROCÉDÉ POUR OPTIMISER LA FOURNITURE D'ÉNERGIE D'UNE SOURCE D'ÉNERGIE ÉLECTRIQUE DANS UNE INSTALLATION ÉLECTRIQUE ET DISPOSITIF POUR LA MISE EN OEUVRE D'UN TEL PROCÉDÉ**

VERFAHREN ZUR OPTIMIERUNG DER ENERGIEVERSORGUNG AUS EINER ELEKTRISCHEN ENERGIEQUELLE IN EINER ELEKTRISCHEN ANLAGE UND VORRICHTUNG ZUR DURCHFÜHRUNG EINES SOLCHEN VERFAHRENS

METHOD FOR OPTIMIZING THE SUPPLY OF ENERGY FROM AN ELECTRICAL ENERGY SOURCE IN AN ELECTRICAL INSTALLATION AND DEVICE FOR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2018 FR 1873415**

(43) Date de publication de la demande:
**24.06.2020 Bulletin 2020/26**

(73) Titulaire: **Schneider Electric Industries SAS**
**92500 Rueil Malmaison (FR)**

(72) Inventeurs:
• **IGNATOVA, Vanya**
**38050 GRENOBLE (FR)**

• **LAPORTE, Alexandre**
**38050 GRENOBLE (FR)**

(74) Mandataire: **Colette, Marie-Françoise et al**
**Schneider Electric Industries SAS**
**Propriété Industrielle**
**160, avenue des Martyrs**
**38000 Grenoble (FR)**

(56) Documents cités:
**EP-A2- 2 582 002        WO-A1-2007/060328**
**CN-B- 103 412 207        FR-A1- 2 823 381**
**US-A1- 2015 270 712**

Printed by Jouve, 75001 PARIS (FR)

## Description

### Domaine technique

La présente invention concerne un procédé pour optimiser la fourniture d'énergie d'une source variable d'énergie électrique, par exemple une source photovoltaïque, dans une installation électrique raccordée à un réseau de distribution d'énergie électrique et fonctionnant dans un mode d'autoconsommation. L'invention concerne également un dispositif mettant en œuvre un tel procédé pour piloter un convertisseur d'énergie électrique implanté dans l'installation électrique et connecté à la source variable d'énergie. L'invention concerne également une installation électrique comportant un tel dispositif.

### Etat de la technique

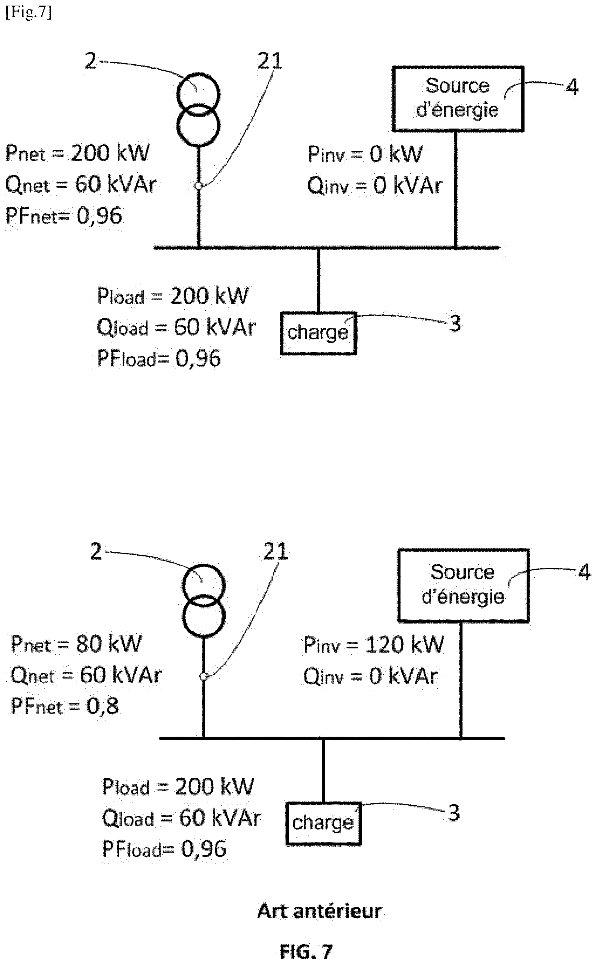

La production d'énergie électrique à partir de sources variables d'énergie, par exemple des énergies appelées généralement renouvelables telles que l'énergie solaire ou l'énergie éolienne, est une alternative à la production d'énergie à partir de sources fossiles. Elle peut constituer une source de revenu pour un producteur local d'énergie et un appoint d'énergie pour un distributeur d'électricité. Cependant, lorsqu'elle est raccordée à un réseau de distribution électrique, la source variable d'énergie électrique ne doit pas perturber ledit réseau de distribution électrique. Dans l'art antérieur représenté en figure 7, en l'absence de production d'énergie par la source renouvelable, pour une charge électrique consommant une puissance active de 200 kWatt et une puissance réactive de 60 kVar, soit un facteur de puissance égal à 0,96, le réseau électrique fournit les mêmes puissances actives, réactives avec le même facteur de puissance. Quand la source variable d'énergie fournit une puissance active de 120 kWatt et 0 kVar, le réseau électrique fournit la différence entre l'énergie produite par la source variable et l'énergie consommée par la charge soit 80 kWatt de puissance active et 60 kVar de puissance réactive, le facteur de puissance devient égal à 0,8. En conséquence, le facteur de puissance, vu par le réseau de distribution électrique est dégradé. Généralement, des pénalités sont appliquées par le distributeur d'énergie à un utilisateur dont l'installation électrique présente un facteur de puissance inférieur à un seuil prédéterminé, par exemple inférieur à 0,93.

La demande de brevet US 2017/214 337 A1 décrit le fonctionnement d'un convertisseur connecté entre une source d'énergie alternative et un réseau de distribution d'énergie électrique, le convertisseur étant piloté pour fournir une puissance active et une puissance réactive selon une demande effectuée par l'exploitant du réseau de distribution électrique. Ce mode de fonctionnement ne permet pas l'autoconsommation de l'énergie électrique produite par la source d'énergie alternative et rend la gestion de l'installation électrique tributaire du distributeur d'énergie électrique.

La demande de brevet WO 2012/125 278 A2 décrit un dispositif d'ajustement de la puissance active et réactive produite par une installation photovoltaïque en fonction de la tension fournie par le réseau de distribution électrique, l'amplitude de ladite tension étant prise comme référence, afin de ne pas perturber le fonctionnement du réseau de distribution électrique.

On connait le brevet US 9 806 665 B2 portant sur le contrôle de la production d'une installation photovoltaïque. L'installation photovoltaïque régule sa production de puissance active et réactive pour être dans des plages imposées contractuellement. La régulation est effectuée en réalisant une croissance ou une décroissance de puissance active pour ajuster la puissance réactive et inversement au moyen d'un régulateur Proportionnel-Intégral.

La demande de brevet EP 3 029 797 A1 décrit un dispositif permettant d'optimiser la conversion et la production d'énergie d'une source d'énergie renouvelable. Ce dispositif comporte une batterie et peut fonctionner en mode d'autoconsommation. L'objet de l'invention est de maximiser la fourniture locale d'énergie en optimisant les flux d'énergie entre le réseau, la batterie, la charge et la source renouvelable.

La demande de brevet WO 2007/060 328 A1 décrit un dispositif de régulation pour une installation de production décentralisée d'énergie effectuant une régulation de la tension en un point de raccordement de l'installation de production en produisant ou en absorbant de la puissance active ou réactive.

### Exposé de l'invention

La présente invention a pour objet un procédé pour optimiser la fourniture d'énergie d'une source variable d'énergie électrique implantée dans une installation électrique raccordée à un réseau de distribution d'énergie électrique en un point de raccordement, ladite installation électrique comportant :

- au moins un convertisseur, connecté d'une part à la source variable d'énergie électrique et d'autre part au point de raccordement, ledit convertisseur étant agencé pour convertir l'énergie délivrée par la source d'énergie électrique et fournir une première puissance active commandable et une première puissance réactive commandable au point de raccordement, et

- une charge électrique, connectée au point de raccordement, et consommant une deuxième puissance active et une deuxième puissance réactive,

le réseau de distribution d'énergie électrique fournissant à l'installation électrique, une troisième puissance active et une troisième puissance réactive avec un facteur de puissance réseau,
le procédé comportant une étape de détermination de la première puissance active et de la première puissance réactive que doit fournir le convertisseur en fonction de la deuxième puissance active et de la deuxième puissance réactive, afin que le facteur de puissance réseau soit supérieur ou égal à un facteur de puissance cible prédéterminé.

Préférentiellement, la première puissance active et la première puissance réactive sont déterminées, en outre, pour minimiser la troisième puissance active ou maximiser la première puissance active.

Selon un premier mode de réalisation particulier, le convertisseur fournit la première puissance active et la première puissance réactive avec un facteur de puissance convertisseur supérieur ou égal à un facteur de puissance convertisseur minimal prédéfini.

Préférentiellement, le convertisseur fournit une première puissance réactive maximale quand le facteur de puissance convertisseur est égal au facteur de puissance convertisseur minimal.

Selon un second mode de réalisation particulier, le réseau d'énergie électrique fournit une troisième puissance active minimale à ladite installation électrique quand l'installation électrique est en capacité de fournir de l'énergie électrique dans un mode d'autoconsommation.

Avantageusement :

- la première puissance active fournie par le convertisseur est égale à la différence entre la deuxième puissance active consommée par la charge et la troisième puissance active minimale fournie par le réseau de distribution d'énergie électrique,
- le facteur de puissance convertisseur est supérieur ou égal au facteur de puissance minimal, et
- la troisième puissance réactive est minimisée ou la première puissance réactive est maximisée.

Selon un mode de réalisation particulier, la deuxième puissance active et la deuxième puissance réactive consommées par la charge sont évaluées au cours d'une séquence comportant :

- une étape de commande du convertisseur pour fournir une première puissance active nulle et une première puissance réactive nulle,
- une étape de mesure de la troisième puissance active et de la troisième puissance réactive, et
- une étape de détermination de la deuxième puissance active et de la deuxième puissance réactive, la deuxième puissance active étant égale à la troisième puissance active et la deuxième puissance réactive étant égale à la troisième puissance réactive.

L'invention porte également sur un dispositif de pilotage d'un convertisseur d'énergie électrique dans une installation électrique connectée à un réseau électrique en un point de raccordement, ladite installation électrique comportant :

- au moins un convertisseur d'énergie électrique connecté d'une part au point de connexion, et connecté d'autre part à, au moins, une source d'énergie électrique pour convertir l'énergie fournie par ladite source d'énergie, ledit convertisseur fournissant une première puissance active et une première puissance réactive, avec un facteur de puissance convertisseur,
- au moins une charge électrique, connectée au point de connexion, consommant une deuxième puissance active et une deuxième puissance réactive,

le dispositif de pilotage comportant :

- un premier circuit de mesure pour mesurer soit une troisième puissance active et une troisième puissance réactive soit une troisième puissance apparente et un facteur de puissance réseau au point de raccordement,
- un second circuit de mesure pour mesurer soit la première puissance active et la première puissance réactive soit la première puissance apparente et le facteur de puissance convertisseur, et
- un circuit de pilotage connecté :

  - au premier circuit de mesure pour recevoir une mesure de la troisième puissance active, de la troisième puissance réactive, de la troisième puissance apparente et du facteur de puissance réseau,
  - au second circuit de mesure pour recevoir une mesure de la première puissance active, de la première puissance réactive, de la première puissance apparente et du facteur de puissance convertisseur fournis par le convertisseur, et

- au convertisseur d'énergie électrique pour commander la première puissance active et la première puissance réactive que doit fournir ledit convertisseur,

ledit circuit de pilotage étant agencé pour exécuter le procédé décrit précédemment et transmettre au convertisseur une consigne de fourniture de puissance active et de puissance réactive correspondant à la première puissance active et à la première puissance réactive que doit fournir ledit convertisseur.

L'invention porte également sur une installation électrique connectée à un réseau électrique en un point de raccordement, ladite installation électrique comportant :

- au moins une source variable d'énergie électrique,
- au moins un convertisseur d'énergie électrique connecté d'une part au point de connexion, et connecté d'autre part à la source variable d'énergie électrique pour convertir l'énergie fournie par ladite source d'énergie en énergie électrique disponible au point de connexion, et
- au moins une charge électrique, connectée au point de connexion, et
- un dispositif de pilotage du convertisseur d'énergie électrique tel que décrit précédemment.

Préférentiellement, la source variable d'énergie électrique est constituée d'au moins un panneau photovoltaïque.

**Brève description des dessins**

Les dessins annexés illustrent l'invention :

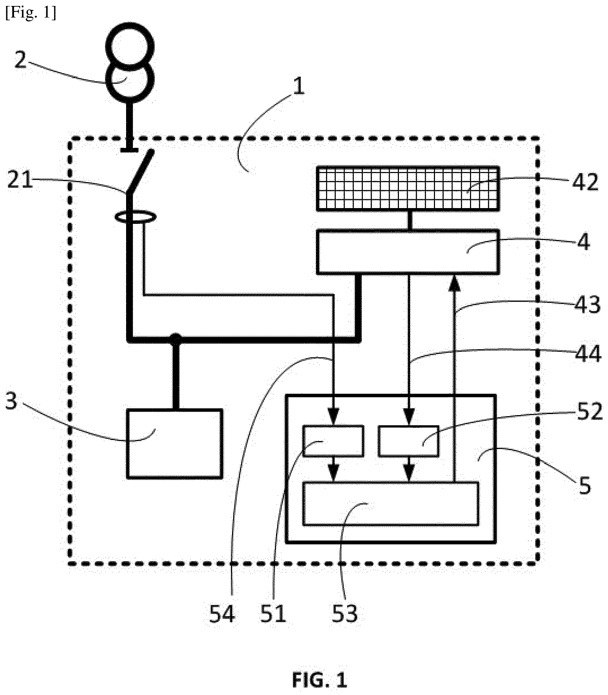

[Fig. 1] la figure 1 représente sous forme d'un schéma bloc, une installation électrique comportant une source variable d'énergie, une charge électrique, un réseau de distribution d'énergie, un convertisseur d'énergie électrique et un dispositif de pilotage du convertisseur, pour un dispositif et un procédé selon des modes de réalisation de l'invention,

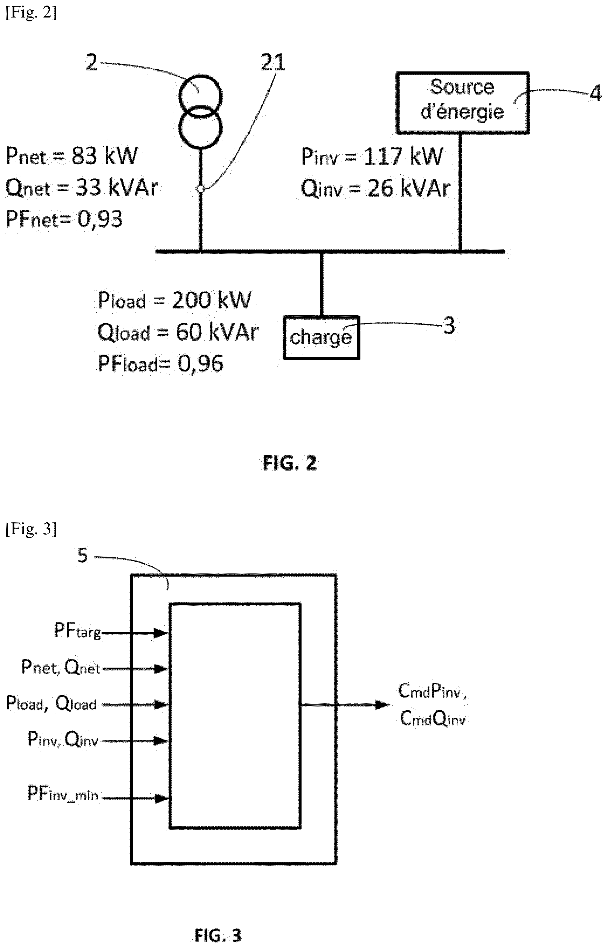

[Fig. 2] la figure 2 est une représentation schématique d'une installation électrique comportant une source variable d'énergie pour illustrer, par un exemple, les valeurs des puissances active, réactive et du facteur de puissance dans l'installation électrique permettant l'autoconsommation de l'énergie produite et le maintien d'une valeur du facteur de puissance de l'installation électrique au-dessus d'un facteur de puissance imposé par un distributeur d'énergie,

[Fig. 3] la figure 3 représente sous forme d'un schéma bloc, les données d'entrée et de sortie, selon un mode de réalisation de l'invention, permettant à un procédé, implanté dans un dispositif, d'optimiser la fourniture d'énergie d'une source variable d'énergie,

[Fig. 4A]

[Fig. 4B]

[Fig. 4C]

[Fig. 4D]

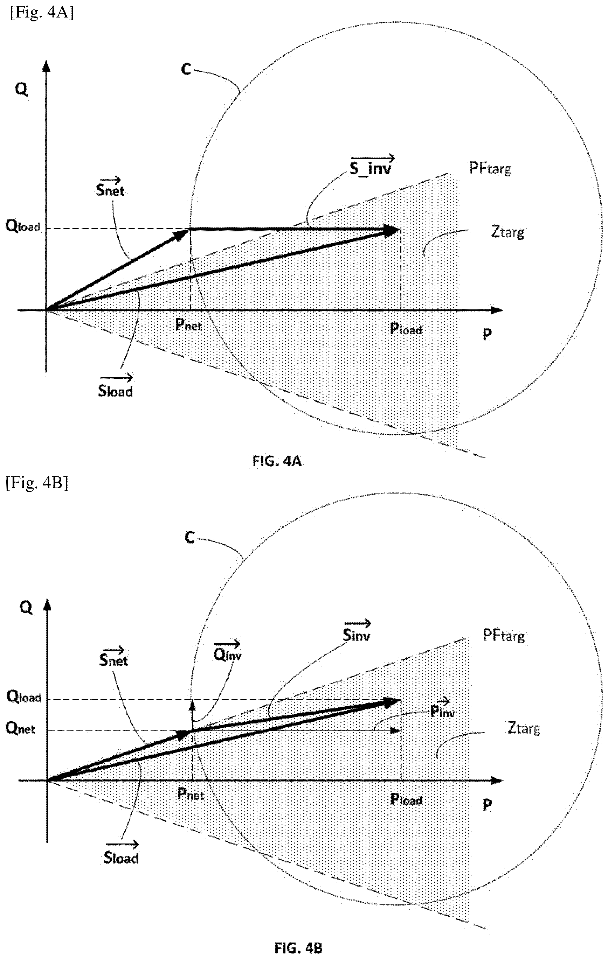

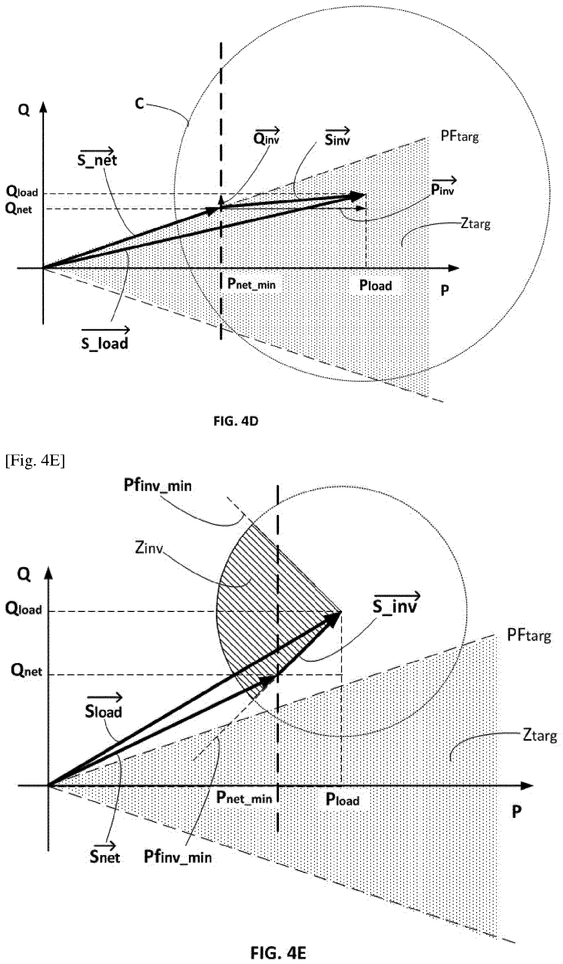

[Fig. 4E] les figures 4A à 4E illustrent, au moyen de diagrammes de Fresnel, des vecteurs représentatifs des puissances apparentes, actives et réactives et des facteurs de puissance au niveau de la charge électrique, du convertisseur d'énergie et du réseau de distribution fonctionnant dans un procédé selon un mode de réalisation de l'invention,

[Fig. 5A]

[Fig. 5B] les figure 5A et 5B représentent un organigramme du procédé pour optimiser la fourniture d'énergie d'une source variable selon l'invention,

[Fig. 6] la figure 6 représente un organigramme pour une détermination des puissances actives et réactives consommées par la charge électrique, et

[Fig. 7] la figure 7 représente une installation de l'art antérieur.

**Description détaillée de modes de réalisation préférés**

La figure 1 représente sous forme d'un schéma bloc, une installation électrique 1 comportant une source variable d'énergie 42, une charge électrique 3, un réseau de distribution d'énergie 2, au moins un convertisseur d'énergie électrique 4 et un dispositif de pilotage du convertisseur 5. La source variable d'énergie 42 est une source de transformation d'une énergie durable telle que l'énergie délivrée par le soleil en énergie appelée généralement renouvelable telle que l'énergie solaire, éolienne, marémotrice, etc. La source d'énergie variable 42 est reliée au convertisseur d'énergie électrique 4 dont le rôle est de transformer l'énergie fournie par la source variable 42 en énergie électrique pouvant être consommée par la charge électrique 3. La charge électrique 3 est connectée au convertisseur 4 dans l'installation électrique 1. L'installation électrique 1 est raccordée à un réseau de distribution d'énergie électrique 2 en un point de connexion 21, la charge électrique 3 et le convertisseur 4 sont donc connectés au réseau de distribution d'énergie 2.

Dans l'installation électrique 1, le convertisseur d'énergie électrique 4 fournit une première puissance active Pinv et une première puissance réactive Qinv. Le niveau de puissance que fournit le convertisseur 4 est commandable : le dispositif de pilotage 5, connecté audit convertisseur 4, envoie au convertisseur 4 une consigne de fourniture de puissance active CmdPinv et réactive, CmdQinv, afin que le convertisseur 4 fournisse la première puissance active Pinv et la première puissance réactive Qinv demandées. La charge électrique 3 consomme une deuxième puissance active Pload et une deuxième puissance réactive Qload. La charge électrique 3 représente un ou plusieurs équipements électriques pouvant être mis en fonctionnement ou hors fonctionnement selon le besoin. La deuxième puissance active Pload et la deuxième puissance réactive Qload varient donc au cours du temps. L'installation électrique 1 fonctionne préférentiellement en mode d'autoconsommation c'est-à-dire que la source variable d'énergie 42 fournit de l'énergie à la charge électrique 3. Cependant, d'une part, la source variable d'énergie 42 n'est pas toujours dimensionnée pour fournir toute l'énergie consommée par la charge électrique 3 et, d'autre part, la fourniture de l'énergie par la source d'énergie 42 est rendue variable par la présence de nuages, la variation de la force du vent, la saison, etc et, en conséquence, dans le cas où la source variable d'énergie 42 n'est pas en capacité de fournir toute l'énergie demandée par la charge électrique 3, le réseau de distribution d'énergie 2 fournit, en complément, une troisième puissance active Pnet et une troisième puissance réactive Qnet.

L'installation électrique 1 représente une charge électrique pour le réseau de distribution 2 et le gestionnaire du réseau de distribution 2 impose un facteur de puissance réseau PFnet supérieur ou égal à un facteur de puissance cible PFtarg à l'installation électrique 1. Des pénalités sont appliquées quand le facteur de puissance réseau PFnet de l'installation électrique 1 est inférieur au facteur de puissance cible PFtarg. La figure 2 représente l'installation électrique 1, sous forme schématique, pour illustrer, par un exemple, les valeurs des puissances active et réactive et du facteur de puissance permettant l'autoconsommation de l'énergie produite par la source variable 42. Le facteur de puissance de l'installation électrique PFnet est égal au facteur de puissance minimal imposé par le distributeur d'énergie PFtarg. Cet équilibre est instable puisque, d'une part, la deuxième puissance active Pload et la deuxième puissance réactive Qload varient en fonction des variations de la charge électrique 3, et d'autre part, la première puissance active Pinv et la première puissance réactive Qinv varient en fonction de la production de la source d'énergie 42. L'invention a pour objet un procédé pour déterminer la première puissance active Pinv et la première puissance réactive Qinv que doit fournir le convertisseur 4 en fonction de la deuxième puissance active Pload et de la deuxième puissance réactive Qload, afin que le facteur de puissance réseau PFnet soit supérieur ou égal au facteur de puissance cible PFtarg prédéterminé. Le procédé est mis en œuvre dans un dispositif de pilotage 5 connecté au convertisseur d'énergie 4 pour commander audit convertisseur 4 la fourniture des premières puissances actives et réactives Pinv et Qinv. Le dispositif de pilotage 5 effectue également une mesure des troisièmes puissances active et réactive Pnet et Qnet fournies par le réseau électrique 2. La figure 3 représente sous forme d'un schéma bloc, les données d'entrée et de sortie utilisées par le procédé faisant l'objet de l'invention :

- le facteur de puissance cible PFtarg est un paramètre prédéterminé, défini par le gestionnaire du réseau de distribution 2, généralement compris entre 0,8 et 0,95,
- les troisièmes puissances active et réactive Pnet et Qnet sont mesurées préférentiellement au moyen d'un premier circuit de mesure 51 connecté par une liaison 54 au point de raccordement 21,
- la valeur de chacune des premières puissances active Pinv et réactive Qinv fournies par le convertisseur 4 peut être mesurée en sortie dudit convertisseur 4 ou transmise par le convertisseur 4 au dispositif de pilotage 5 par un moyen de communication 44,
- les deuxièmes puissances active et réactive Pload et Qload consommées par la charge 3 peuvent être des données calculées à partir des valeurs des premières et troisièmes puissances selon des étapes décrites ultérieurement, ou éventuellement prédéfinies si la charge électrique 3 est fixe, et
- un facteur de puissance minimal PFinv_min prédéfini de fonctionnement du convertisseur 4.

Le procédé faisant l'objet de l'invention se déroule cycliquement : il traite les données d'entrée pour fournir des données de sortie telles qu'une valeur de puissance réactive commandée Cmd_Pinv et une valeur de puissance réactive commandée Cmd_Qinv à destination du convertisseur 4. Le convertisseur 4 a pour consigne la fourniture des premières puissances active Pinv et réactive Qinv actualisées en fonction des valeurs des puissances actives et réactives commandées, respectivement Cmd_Pinv et Cmd_Qinv.

Les figures 4A à 4E illustrent, au moyen de diagrammes de Fresnel, le traitement effectué sur les données d'entrée pour obtenir les données de sortie. Dans un diagramme de Fresnel, la puissance active est représentée en abscisse, la puissance réactive est représentée en ordonnée. Afin de clarifier les diagrammes, les puissances actives P et réactives Q sont représentées sous forme d'un vecteur représentatif de la puissance apparente, notée S. La puissance apparente est égale à la racine carrée de la somme du carré de la puissance active et du carré de la puissance réactive. Le cosinus de l'angle que fait le vecteur représentatif de la puissance apparente avec l'axe des abscisses correspond au facteur de puissance FP. Le facteur de puissance est égal au rapport de la puissance active P sur la puissance apparente S soit FP = P/S. Dans la suite du document, une première puissance apparente Sinv correspond à une puissance apparente fournie par le convertisseur 4, une deuxième puissance apparente Sload correspond à une puissance apparente consommée par la charge 3 et une troisième puissance apparente Snet correspond à une puissance apparente fournie par le réseau de distribution 2. Ainsi, sur les figure 4A à 4E, la deuxième puissance active, Pload, est représentée en abscisse, la deuxième puissance réactive Qload est représentée en ordonnée, la deuxième puissance apparente Sload est représentée sous forme d'un vecteur ayant une origine à l'intersection des axes des abscisses et des ordonnées et son extrémité ayant pour abscisse la valeur Pload, et pour ordonnée la valeur Qload. La troisième puissance apparente Snet est représentée de la même façon. Dans tous les cas de figure, la deuxième puissance apparente Sload est égale à la somme vectorielle de la troisième puissance apparente Snet fournie par le réseau de distribution et de la première puissance apparente Sinv fournie par le convertisseur :

Equation 1

[Math 1]

$$\overrightarrow{Sload} = \overrightarrow{Snet} + \overrightarrow{Sinv}$$

Sload étant le vecteur représentatif de la deuxième puissance apparente,
Snet étant le vecteur représentatif de la troisième puissance apparente, et
Sinv étant le vecteur représentatif de la première puissance apparente.

On peut également formuler les équations suivantes :

$$P_{load} = P_{net} + P_{inv}$$

$$Q_{load} = Q_{net} + Q_{inv}$$

Pload étant la deuxième puissance active,
Pnet étant la troisième puissance active,
Pinv étant la première puissance active,
Qload étant la deuxième puissance réactive,
Qnet étant la troisième puissance réactive,
Qinv étant la première puissance réactive,

Pour traduire l'équation 1 sur un diagramme de Fresnel, la première puissance apparente Sinv doit avoir son origine à l'extrémité du vecteur représentant la troisième puissance apparente Snet fournie par le réseau de distribution et son extrémité à l'extrémité du vecteur représentant la deuxième puissance apparente Sload.

La figure 4A représente un premier diagramme de Fresnel afin d'illustrer un inconvénient de l'art antérieur. La deuxième puissance apparente Sload est inscrite dans une zone de facteur de puissance cible Ztarg correspondant à un facteur de puissance supérieur au facteur de puissance cible PFtarg. Quand la source variable d'énergie 42 ne produit pas d'énergie, la première puissance apparente Sinv est nulle et le réseau de distribution 2 doit fournir la troisième puissance apparente Snet égale à la deuxième puissance apparente Sload. Dans ce cas, le facteur de puissance réseau PFnet reste supérieur au facteur de puissance cible PFtarg. Si la source variable d'énergie 42 produit une première puissance apparente Sinv, purement réactive, ainsi que représenté en figure 4A, la troisième puissance apparente Snet diminue en amplitude mais le facteur de puissance réseau PFnet sort de la zone Ztarg, ce qui correspondant à un facteur de puissance inférieur au facteur de puissance cible PFtarg. Cette configuration est défavorable parce que, bien que la troisième puissance apparente Snet fournie par le réseau de distribution soit réduite, la production d'énergie par la source variable d'énergie 42 sera pénalisée à cause d'un mauvais facteur de puissance réseau PFnet.

La figure 4B représente un deuxième diagramme de Fresnel afin d'illustrer le procédé de détermination de la première puissance active Pinv et de la première puissance réactive Qinv que doit fournir le convertisseur en fonction de la deuxième puissance active Pload et de la deuxième puissance réactive Qload, afin que le facteur de puissance réseau PFnet soit supérieur ou égal à un facteur de puissance cible PFtarg prédéterminé. Le facteur de puissance réseau PFnet devant être supérieur ou égal au facteur de puissance cible PFtarg, le vecteur représentatif de la troisième puissance apparente Snet doit être situé dans la zone de facteur de puissance cible Ztarg et, au pire cas, aligné selon une direction correspondant au facteur de puissance cible PFtarg ainsi que représenté en figure 4B. L'extrémité du vecteur représentatif de la première puissance apparente Sinv est situé à l'extrémité du vecteur représentatif de la deuxième puissance apparente Sload.

Le convertisseur 4 fournit une première puissance apparente Sinv en relation avec l'énergie fournie par la source variable d'énergie 42. A un instant donné, la première puissance apparente Sinv ne peut donc pas être augmentée, en revanche la première puissance active Pinv et la première puissance réactive Qinv sont commandables afin de fournir la première puissance apparente Sinv avec un facteur de puissance convertisseur, PFinv, commandable. L'origine du vecteur représentant la première puissance apparente Sinv sur la figure 4B peut donc tourner sur un cercle C autour de l'extrémité dudit vecteur Sinv.

Pour respecter l'équation 1, le vecteur représentatif de la première puissance apparente Sinv doit avoir son origine au point d'intersection entre le cercle C et, au pire cas, la direction correspondant au facteur de puissance cible PFtarg. Il existe une infinité de solutions possibles, cependant la détermination de la première puissance apparente Sinv représentée sur la figure 4B est la solution qui minimise la troisième puissance active Pnet fournie par le réseau de distribution 2 ou maximise la première puissance active Pinv fournie par le convertisseur 4. Cette solution est particulièrement intéressante puisque le facteur de puissance réseau PFnet est égal au facteur de puissance cible PFtarg et, par conséquent, aucune pénalité n'est appliquée à l'installation électrique 1. De plus, la troisième puissance active Pnet fournie par le réseau de distribution 2 étant minimisée, le coût de l'énergie fournie par le réseau de distribution 2 sera également minimisé.

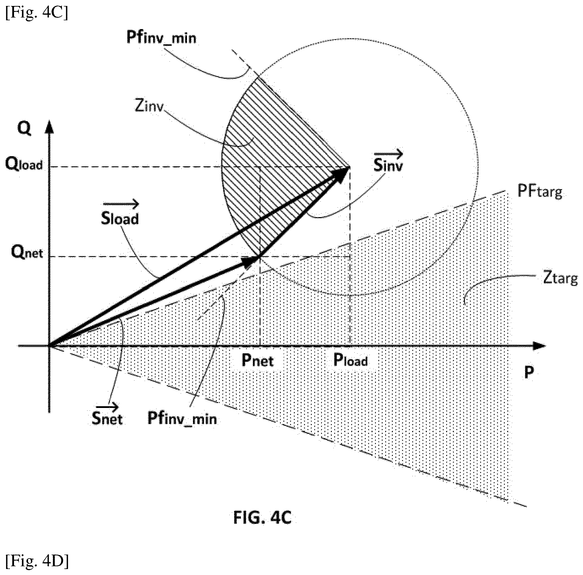

Pour réduire le coût des moyens de conversion de l'énergie, un convertisseur 4 ne comportant pas de moyens de stockage de l'énergie, ou comportant des moyens de stockage limités, peut être utilisé. Dans ce cas, la première puissance active Pinv et la première puissance réactive Qinv sont commandables, mais le facteur de puissance convertisseur PFinv doit être supérieur ou égal à un facteur de puissance minimal PFinv_min prédéfini. Le facteur de puissance du convertisseur PFinv est ainsi commandable uniquement dans une zone de facteur de puissance convertisseur Zinv supérieur ou égal au facteur de puissance minimal PFinv_min, par exemple égal à 0,8. La figure 4C représente un troisième diagramme de Fresnel afin d'illustrer le procédé de détermination de la première puissance active Pinv et de la première puissance réactive Qinv que doit fournir le convertisseur 4 en fonction de la deuxième puissance active Pload et de la deuxième puissance réactive Qload, quand le facteur de puissance du convertisseur PFinv est limité à la zone de facteur de puissance convertisseur Zinv. L'origine du vecteur représentant la première puissance apparente Sinv sur la figure 4C ne peut pas tourner sur le cercle C en dehors de la zone de facteur de puissance convertisseur Zinv. Le facteur de puissance du convertisseur PFinv le plus favorable sera donc le facteur de puissance minimal PFinv_min. Dans cette configuration, la troisième puissance active Pnet fournie par le réseau de distribution 2 sera minimisée et le facteur de puissance réseau PFnet sera plus proche du facteur de puissance cible PFtarg, les pénalités liées à un mauvais facteur de puissance seront minimisées.

Dans le cadre d'une installation électrique 1 raccordée à un réseau de distribution d'énergie électrique 2 et fonctionnant dans un mode d'autoconsommation, le gestionnaire dudit réseau de distribution 2 peut imposer une fourniture d'une troisième puissance active minimale Pnet_min prédéfinie, par exemple, de manière contractuelle. Dans ce cas, la première puissance active Pinv fournie par le convertisseur 4 est inférieure ou égale à la différence entre la deuxième puissance active Pload consommée par la charge et la troisième puissance active minimale Pnet_min fournie par le réseau de distribution d'énergie électrique 2 : Pinv $\geq$ Pload - Pnet_min. La figure 4D représente un quatrième diagramme de Fresnel afin d'illustrer le procédé de détermination de la première puissance active Pinv et de la première puissance réactive Qinv que doit fournir le convertisseur 4 en fonction de la deuxième puissance active Pload et de la deuxième puissance réactive Qload, quand la troisième puissance active Pnet est minimale, Pnet = Pnet_min. Le vecteur représentatif de troisième puissance apparente Snet est formé par la composante de la troisième puissance active Pnet égale à la puissance minimale Pnet_min. Ledit vecteur est aligné selon une direction correspondant au facteur de puissance cible PFtarg. La deuxième puissance apparente Sload est la composée vectorielle de la deuxième puissance active Pload et de la deuxième puissance réactive Qload. L'extrémité du vecteur représentatif de la première puissance apparente Sinv est situé à l'extrémité du vecteur représentatif de la deuxième puissance apparente Sload. Pour respecter l'équation 1, le vecteur représentatif de la première puissance apparente Sinv doit avoir son origine à l'extrémité du vecteur représentatif de la troisième puissance apparente Snet fournie par le réseau de distribution quand ladite extrémité est située à l'intérieur du cercle C. Il est possible d'optimiser la fourniture d'énergie par le convertisseur 4 en augmentant la première puissance réactive Qinv, dans la limite où le facteur de puissance du convertisseur PFinv reste dans la zone de facteur de puissance convertisseur Zinv, ce qui accroit le facteur de puissance réseau PFnet. Dans le cas contraire, c'est-à-dire quand l'extrémité du vecteur représentatif de la troisième puissance apparente Snet est en dehors du cercle C, la contrainte de fourniture d'une troisième puissance active minimale Pnet_min n'a pas lieu d'être puisque le convertisseur 4 n'est pas en capacité de produire suffisamment d'énergie, la configuration est identique au deuxième diagramme de Fresnel décrit en figure 4B.

La figure 4E représente, au moyen d'un cinquième diagramme de Fresnel, une configuration cumulant la limitation du facteur de puissance du convertisseur PFinv à une valeur supérieure ou égale au facteur de puissance minimal PFinv_min et l'obligation d'une consommation d'une puissance minimale Pnet_min. L'origine du vecteur représentatif de la première puissance apparente Sinv ne peut simultanément être situé dans la zone de facteur de puissance convertisseur Zinv et dans la zone de facteur de puissance cible Ztarg. Dans ce cas :

- la première puissance active Pinv fournie par le convertisseur 4 est égale à la différence entre la deuxième puissance active Pload consommée par la charge et la troisième puissance active minimale Pnet_min fournie par le réseau de distribution d'énergie électrique 2, Pinv= Pload- Pnet_min, et
- le facteur de puissance convertisseur PFinv est supérieur ou égal au facteur de puissance minimal PFinv_min, et
- la troisième puissance réactive Qnet est minimisée.

D'autres configurations sont possibles, cependant elles peuvent être ramenées à l'une des configurations décrite dans une des figures 4B à 4E.

L'étape de détermination de la première puissance active Pinv et de la première puissance réactive Qinv que doit fournir le convertisseur 4 peut être effectuée par un calcul vectoriel, en utilisant le calcul matriciel ou encore en utilisant des nombres complexes ou imaginaires, par exemple Sinv = Pinv + j Qinv. En fonction de la méthode de calcul utilisée, il sera plus simple d'utiliser la puissance active P et la puissance réactive Q ou la puissance apparente S et le facteur de puissance PF.

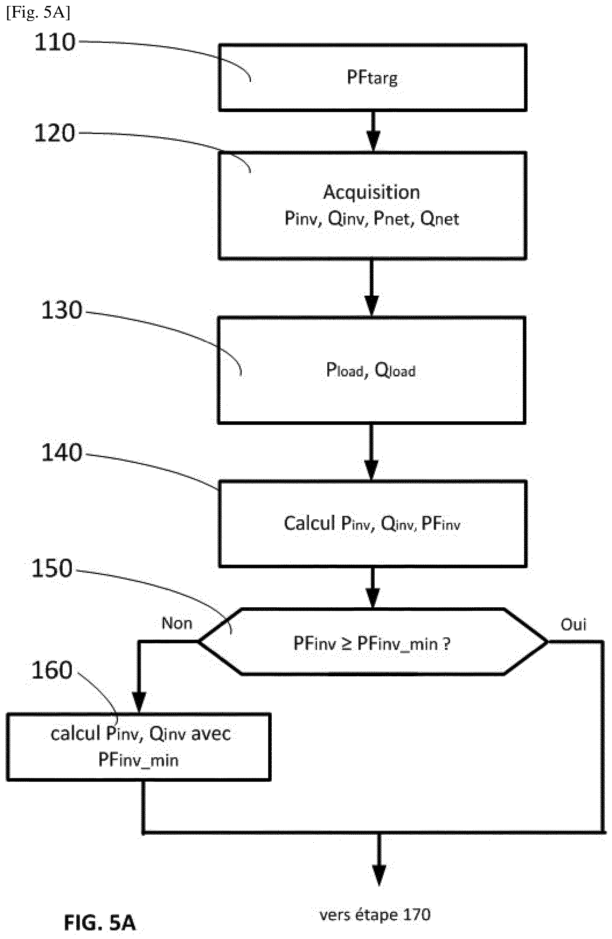

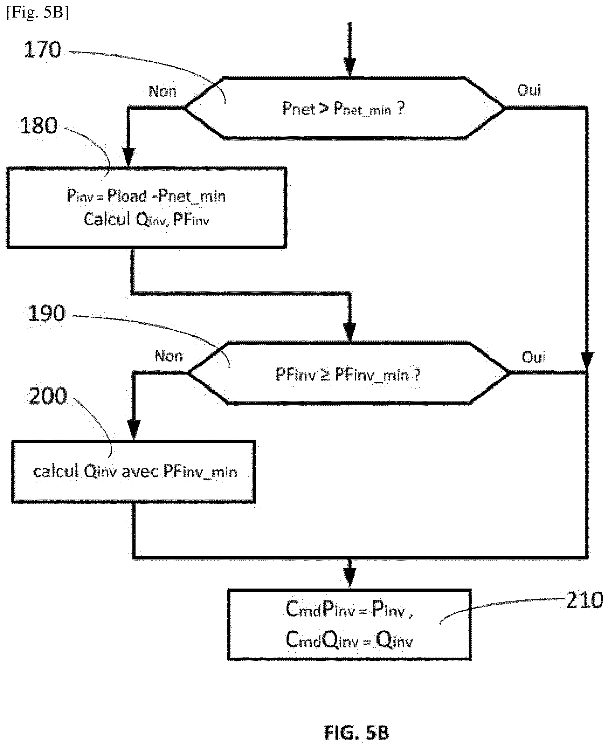

Les figure 5A et 5B représentent un organigramme du procédé selon l'invention.

Le procédé commence par une étape 110 d'acquisition de la valeur du facteur de puissance cible PFtarg. La valeur dudit facteur de puissance peut être mémorisée en mémoire dans le dispositif de pilotage du convertisseur 5 ou saisi via une interface homme-machine. Le procédé se poursuit par une étape 120 d'acquisition des valeurs de la première puissance active Pinv et de la première puissance réactive Qinv au moyen d'une mesure ou par communication des données entre le convertisseur 4 et le dispositif de pilotage du convertisseur 5. Une mesure de la troisième puissance active Pnet et de la troisième puissance réactive Qnet est également effectuée au cours de l'étape 120. Le procédé se poursuit par une séquence d'évaluation 130 des deuxièmes puissances active et réactive Pload et Qload consommées par la charge 3. En variante, quand la charge 3 est constante, le procédé peut disposer des valeurs prédéterminées des deuxièmes puissances active et réactive Pload et Qload mémorisée en mémoire dans le dispositif de pilotage du convertisseur 5 ou saisies via une interface homme-machine. Quand la charge 3 est variable, ce qui est généralement le cas, et selon une première variante, le procédé calcule la deuxième puissance active Pload en effectuant une somme de la troisième puissance active Pnet fournie par le réseau de distribution 2 et de la première puissance active Pinv fournie par le convertisseur 4 , Pload= Pnet + Pinv, les valeurs de Pnet et Pinv ayant été mesurées à l'étape 120 précédente. Un calcul similaire est effectué pour calculer la deuxième puissance active: Qload = Qnet + Qinv.

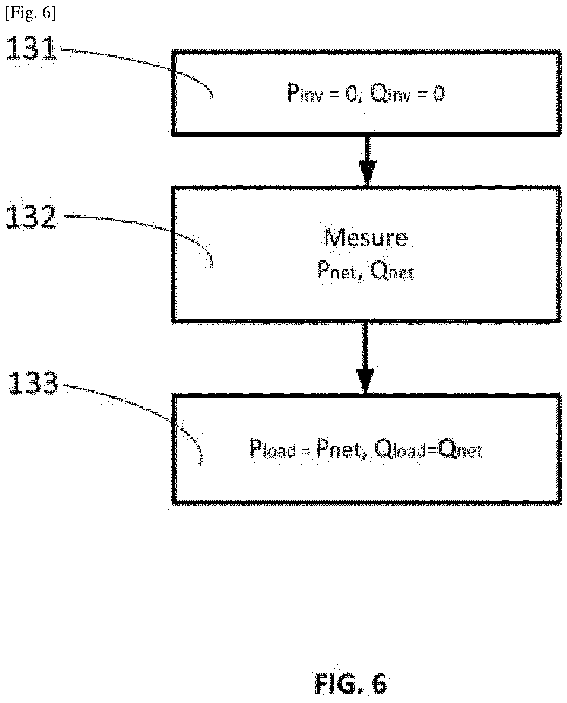

Selon une seconde variante, représentée sous forme d'un organigramme en figure 6, la deuxième puissance active Pload et la deuxième puissance réactive Qload consommées par la charge 3 sont évaluées au cours d'une séquence comportant :

- une étape 131 de commande du convertisseur 4 pour fournir une première puissance active Pinv nulle et une première puissance réactive Qinv nulle,
- une étape 132 de mesure de la troisième puissance active Pnet et de la troisième puissance réactive Qnet, et
- une étape de détermination 133 de la deuxième puissance active Pload et de la deuxième puissance réactive Qload, la deuxième puissance active Pload étant égale à la troisième puissance active Pnet et la deuxième puissance réactive Qload étant égale à la troisième puissance réactive Qnet.

Pload = Pnet quand Pinv = 0, et
Qload = Qnet quand Qinv = 0.

Une première détermination des valeurs de la première puissance active Pinv et de la première puissance réactive Qinv nécessaires pour que le facteur de puissance réseau PFnet soit supérieur ou égal à un facteur de puissance cible PFtarg est effectué au cours d'une étape 140, par exemple au moyen d'un calcul vectoriel décrit en figure 4B. Au cours d'une étape de comparaison 150, quand le facteur de puissance convertisseur PFinv est supérieur au facteur de puissance minimal PFinv_min, c'est-à-dire que le facteur de puissance convertisseur PFinv est situé dans la zone de facteur de puissance convertisseur Zinv, alors le convertisseur peut fournir la première puissance active Pinv et la première puissance réactive Qinv déterminées à l'étape de première détermination 140 et le procédé se poursuit par une étape 170 de vérification de la valeur de la puissance active Pnet fournie par le réseau de distribution. Si, à l'étape de comparaison 150, le facteur de puissance convertisseur, PFinv est inférieur au facteur de puissance minimal PFinv_min, alors le convertisseur ne peut pas fournir les premières puissances actives et réactives Pinv, Qinv déterminées par le procédé, et, dans ce cas, le procédé se poursuit par une étape 160 au cours de laquelle le convertisseur fournit la première puissance réactive Qinv la plus grande possible, ainsi que représenté en figure 4C. La première puissance active Pinv et la première puissance réactive Qinv sont calculées à partir de la puissance apparente Sinv que peut fournir le convertisseur avec le facteur de puissance minimal PFinv_min par exemple selon les équations suivantes:

Equation 2

[Math 2]

$$Qinv = Sinv \sqrt{1 - PFinv\_min^2}$$

Equation 3

[Math 3]

$$Pinv = \sqrt{Sinv^2 - Qinv^2}$$

De cette façon, le convertisseur fournit l'énergie maximale en améliorant le plus possible le facteur de puissance réseau PFnet. Le procédé se poursuit à l'étape 170 de vérification.

Le gestionnaire du réseau de distribution 2 peut imposer une fourniture d'une troisième puissance active minimale Pnet_min dans le cadre du fonctionnement de l'installation électrique 1 en mode d'autoconsommation. Au cours de l'étape 170, le procédé vérifie que la puissance active Pnet fournie par le réseau de distribution est supérieure ou égale à la troisième puissance active minimale Pnet_min. Si c'est le cas, la première puissance active Pinv et de la première puissance réactive Qinv déterminées par le procédé peuvent être fournies par le convertisseur et le procédé se poursuit à une étape 210 de commande du convertisseur 4. Quand la puissance active Pnet fournie par le réseau de distribution est inférieure à la troisième puissance active minimale Pnet_min, le procédé comporte une étape 180 de calcul de la première puissance active Pinv que doit fournir le convertisseur 4 pour que le réseau fournisse la troisième puissance active minimale Pnet_min. Dans ce cas, Pinv = Pload - Pnet_min. La première puissance réactive Qinv est maximisée pour que la troisième puissance réactive Qnet soit minimale, ainsi que représenté en figure 4D. Une détermination du facteur de puissance convertisseur PFinv est effectuée également à l'étape 180. Une comparaison dudit facteur de puissance convertisseur PFinv avec le facteur de puissance minimal PFinv_min est effectué au cours d'une étape 190. Si le facteur de puissance convertisseur PFinv est supérieur au facteur de puissance minimal PFinv_min, les valeurs de la première puissance active Pinv et de la première puissance réactive Qinv que doit fournir le convertisseur ayant été déterminées sont émises respectivement sous forme de paramètres de commande CmdPinv et CmdQinv à destination du convertisseur 4 au cours de l'étape 210 de commande du convertisseur 4. Si, au cours de l'étape de comparaison 190, le facteur de puissance convertisseur PFinv est inférieur au facteur de puissance minimal PFinv_min, alors la première puissance réactive Qinv est définie en fonction de la première puissance active Pinv évaluée précédemment et du facteur de puissance convertisseur minimal PFinv_min ainsi que représenté en figure 4E. Le procédé se poursuit par l'étape 210 de commande du convertisseur 4.

Le procédé se déroule cycliquement, avec une période préférentiellement comprise entre 1 minute et 10 minutes. Le procédé peut également se dérouler sur détection d'une variation de la première puissance active Pinv, réactive Qinv ou apparente Sinv, fournie par le convertisseur 4, ou encore sur détection de variation de la puissance active Pload, réactive Qload ou apparente Sload consommée par la charge 3.

L'invention porte également sur le dispositif de pilotage 5 du convertisseur d'énergie électrique 4 dans l'installation électrique 1. Le dispositif de pilotage 5, représenté sous forme d'un schéma bloc en figure 1, comporte :

- un premier circuit de mesure 51, connecté par une liaison capteur 54 à un capteur, pour mesurer au point de raccordement 21 soit, la troisième puissance active Pnet et la troisième puissance réactive Qnet, soit la troisième puissance apparente Snet et le facteur de puissance réseau PFnet au point de raccordement 21,
- un second circuit de mesure 52, connecté au convertisseur 4 par une première liaison convertisseur 44, pour fournir une mesure, soit de la première puissance active Pinv et de la première puissance réactive Qinv, soit de la première puissance apparente Sinv et du facteur de puissance convertisseur PFinv, fournis par le convertisseur 4, et
- un circuit de pilotage 53 connecté :

  - au premier circuit de mesure 51 pour recevoir soit la mesure de la troisième puissance active Pnet et la mesure de la troisième puissance réactive Qnet, soit la mesure de la troisième puissance apparente Snet et la mesure facteur de puissance réseau PFnet,

- au second circuit de mesure 52 pour recevoir la mesure, soit de la première puissance active Pinv et de la première puissance réactive Qinv, soit de la première puissance apparente Sinv et du facteur de puissance convertisseur PFinv fournis par le convertisseur 4, et
- au convertisseur d'énergie électrique 4, par une seconde liaison convertisseur 43, pour commander soit la première puissance active Pinv et la première puissance réactive Qinv que doit fournir ledit convertisseur 4, soit la première puissance apparente Sinv et le facteur de puissance convertisseur PFinv.

Le circuit de pilotage 53 comporte des circuits pour exécuter le procédé tel que décrit précédemment et pour transmettre au convertisseur 4 les paramètres de commande CmdPinv et CmdQinv correspondants à la première puissance active Pinv et à la première puissance réactive Qinv que le convertisseur 4 doit fournir.

Optionnellement, le dispositif de pilotage 5 peut être implanté dans le convertisseur d'énergie électrique 4 afin de réduire le coût dudit dispositif.

Le premier circuit de mesure 51 est agencé pour effectuer au moins deux mesures, préférentiellement la troisième puissance active Pnet et la troisième puissance réactive Qnet. Ledit premier circuit de mesure 51 peut également effectuer la mesure de la troisième puissance apparente Snet et du facteur de puissance réseau PFnet sachant que la troisième puissance active Pnet et la troisième puissance réactive Qnet peuvent facilement être calculées à partir de la troisième puissance apparente Snet et du facteur de puissance réseau PFnet et réciproquement. Il en est de même pour le second circuit de mesure 52. De manière plus générale, il est possible de reconstituer n'importe quelle mesure de puissance active , réactive , apparente ou du facteur de puissance connaissant au moins deux parmi ces quatre types de mesure.

L'invention porte également sur une installation électrique 1 connectée à un réseau électrique 2 en un point de raccordement 21, ladite installation électrique 1 comportant :

- au moins une source variable d'énergie électrique 42,
- au moins un convertisseur d'énergie électrique 4 connecté d'une part au point de connexion 21, et connecté d'autre part à la source variable d'énergie électrique 42 pour convertir l'énergie fournie par ladite source d'énergie 42 en énergie électrique disponible au point de connexion 21, et
- au moins une charge électrique 3, connectée au point de connexion 21, et
- un dispositif de pilotage 5 du convertisseur d'énergie électrique 4 tel que décrit précédemment.

Préférentiellement, la source variable d'énergie 42 est constituée d'au moins un panneau photovoltaïque. Elle peut également être constituée d'au moins une génératrice entraînée par une éolienne ou par l'énergie des marées.

Le convertisseur 4 peut être formé de la connexion en parallèle de plusieurs convertisseurs, chaque convertisseur étant connecté à une ou plusieurs sources variables d'énergie. Dans ce cas, la mesure de la première puissance active Pinv et de la première puissance réactive Qinv correspond à respectivement une mesure de la puissance active et de la puissance réactive fournies par l'ensemble des convertisseurs et les paramètres de commande CmdPinv et CmdQinv sont appliqués de façon répartie à l'ensemble des convertisseurs pour que l'ensemble des convertisseurs fournisse la première puissance active Pinv et à la première puissance réactive Qinv demandées.

Le procédé et le dispositif pour optimiser la fourniture d'énergie de la source variable d'énergie électrique 42 dans l'installation électrique 1 sont particulièrement intéressants à utiliser dans le cadre d'une production d'énergie électrique dans un mode d'autoconsommation. En effet, le dispositif nécessite uniquement la connaissance de la valeur du facteur de puissance cible PFtarg et, éventuellement, la valeur de la troisième puissance active minimale Pnet_min, ces deux paramètres étant imposés par le gestionnaire du réseau de distribution électrique 2. L'installation électrique 1 se comporte comme un dispositif adaptatif, capable d'optimiser sa production d'énergie en offrant un facteur de puissance réseau PFnet suffisamment élevé pour ne pas générer de pénalité.

## Revendications

1. Procédé pour optimiser la fourniture d'énergie d'une source variable d'énergie électrique (42) dans une installation électrique (1) raccordée à un réseau de distribution d'énergie électrique (2) en un point de raccordement (21), ladite installation électrique (1) comportant :

   - au moins un convertisseur (4), connecté d'une part à la source variable d'énergie électrique (42) et d'autre part au point de raccordement (21), ledit convertisseur (4) étant agencé pour convertir l'énergie délivrée par la source d'énergie électrique (42) et fournir une première puissance active (Pinv) commandable, une première puissance réactive (Qinv) commandable au point de raccordement (21), et
- une charge électrique (3), connectée au point de raccordement (21), et consommant une deuxième puissance active (Pload) et une deuxième puissance réactive (Qload),

le réseau de distribution d'énergie électrique (2) fournissant à l'installation électrique (1), une troisième puissance active (Pnet) et une troisième puissance réactive (Qnet) avec un facteur de puissance réseau (PFnet),
le procédé étant **caractérisé en ce qu'**il comporte une étape de détermination de la première puissance active (Pinv) et de la première puissance réactive (Qinv) que doit fournir le convertisseur (4) en fonction de la deuxième puissance active (Pload) et de la deuxième puissance réactive (Qload), afin que le facteur de puissance réseau (PFnet) soit supérieur ou égal à un facteur de puissance cible (PFtarg) prédéterminé.

2. Procédé selon la revendication 1, **caractérisé en ce que** la première puissance active (Pinv) et la première puissance réactive (Qinv) sont déterminées, en outre, pour minimiser la troisième puissance active (Pnet) ou maximiser la première puissance active (Pinv).

3. Procédé selon l'une des revendications 1 ou 2, **caractérisé en ce que** le convertisseur (4) fournit la première puissance active (Pinv) et la première puissance réactive (Qinv) avec un facteur de puissance convertisseur (PFinv) supérieur ou égal à un facteur de puissance convertisseur minimal (PFinv_min) prédéfini.

4. Procédé selon la revendication précédente, **caractérisé en ce que** le convertisseur (4) fournit une première puissance réactive (Qinv) maximale quand le facteur de puissance convertisseur (PFinv) est égal au facteur de puissance convertisseur minimal (PFinv_min).

5. Procédé selon l'une des revendications 3 ou 4, **caractérisé en ce que** le réseau d'énergie électrique (2) fournit une troisième puissance active minimale (Pnet_min) à ladite installation électrique (1) quand l'installation électrique (1) est en capacité de fournir de l'énergie électrique dans un mode d'autoconsommation.

6. Procédé selon la revendication précédente, **caractérisé en ce que** :

   - la première puissance active (Pinv) fournie par le convertisseur (4) est égale à la différence entre la deuxième puissance active (Pload) consommée par la charge et la troisième puissance active minimale (Pnet_min) fournie par le réseau de distribution d'énergie électrique (2),
   - le facteur de puissance convertisseur (PFinv) est supérieur ou égal au facteur de puissance minimal (PFinv_min), et
   - la troisième puissance réactive (Qnet) est minimisée ou la première puissance réactive (Qinv) est maximisée.

7. Procédé selon l'une des revendications précédentes, **caractérisé en ce que** la deuxième puissance active (Pload) et la deuxième puissance réactive (Qload) consommées par la charge (3) sont évaluées au cours d'une séquence comportant :

   - une étape (131) de commande du convertisseur (4) pour fournir une première puissance active (Pinv) nulle et une première puissance réactive (Qinv) nulle,
   - une étape de mesure (132) de la troisième puissance active (Pnet) et de la troisième puissance réactive (Qnet), et
   - une étape de détermination (133) de la deuxième puissance active (Pload) et de la deuxième puissance réactive (Qload), la deuxième puissance active (Pload) étant égale à la troisième puissance active (Pnet) et la deuxième puissance réactive (Qload) étant égale à la troisième puissance réactive (Qnet).

8. Dispositif de pilotage (5) d'un convertisseur d'énergie électrique (4) dans une installation électrique (1) connectée à un réseau électrique (2) en un point de raccordement (21), ladite installation électrique (1) comportant :

   - au moins un convertisseur d'énergie électrique (4) connecté d'une part au point de connexion (21), et connecté d'autre part à, au moins, une source d'énergie électrique (42) pour convertir l'énergie fournie par ladite source d'énergie (42), ledit convertisseur (4) fournissant une première puissance active (Pinv) et une première puissance réactive (Qinv), avec un facteur de puissance convertisseur (PFinv),
   - au moins une charge électrique (3), connectée au point de connexion (21), consommant une deuxième puissance active (Pload) et une deuxième puissance réactive (Qload),

dispositif de pilotage (5) **caractérisé en ce qu'**il comporte :

- un premier circuit de mesure (51) pour mesurer soit une troisième puissance active (Pnet) et une troisième puissance réactive (Qnet) soit une troisième puissance apparente (Snet) et un facteur de puissance réseau (PFnet) au point de raccordement (21),
- un second circuit de mesure (52) pour mesurer soit la première puissance active (Pinv) et la première puissance réactive (Qinv) soit une première puissance apparente (Sinv) et le facteur de puissance convertisseur (PFinv), et
- un circuit de pilotage (53) connecté :

- au premier circuit de mesure (51) pour recevoir une mesure de la troisième puissance active (Pnet), de la troisième puissance réactive (Qnet), de la troisième puissance apparente (Snet) et du facteur de puissance réseau (PFnet),
- au second circuit de mesure (52) pour recevoir une mesure de la première puissance active (Pinv), de la première puissance réactive (Qinv), de la première puissance apparente (Sinv) et du facteur de puissance convertisseur (PFinv) fournis par le convertisseur (4), et
- au convertisseur d'énergie électrique (4) pour commander la première puissance active (Pinv) et la première puissance réactive (Qinv) que doit fournir ledit convertisseur (4),

ledit circuit de pilotage (53) étant agencé pour exécuter le procédé selon l'une quelconque des revendications 1 à 7 et transmettre au convertisseur (4) une consigne de fourniture de puissance active CmdPinv et de puissance réactive CmdQinv correspondant à la première puissance active (Pinv) et à la première puissance réactive (Qinv) que doit fournir ledit convertisseur (4).

9. Installation électrique (1) connectée à un réseau électrique (2) en un point de raccordement (21), ladite installation électrique (1) comportant :

- au moins une source variable d'énergie électrique (42),
- au moins un convertisseur d'énergie électrique (4) connecté d'une part au point de connexion (21), et connecté d'autre part à la source variable d'énergie électrique (42) pour convertir l'énergie fournie par ladite source d'énergie (42) en énergie électrique disponible au point de connexion (21), et
- au moins une charge électrique (3), connectée au point de connexion (21), installation électrique (1) **caractérisée en ce qu'**elle comporte un dispositif de pilotage (5) du convertisseur d'énergie électrique (4) selon la revendication précédente.

10. Installation électrique (1) selon la revendication précédente, **caractérisée en ce que** la source variable d'énergie électrique (42) est constituée d'au moins un panneau photovoltaïque.


**Patentansprüche**

1. Verfahren zur Optimierung der Energieversorgung einer variablen Quelle elektrischer Energie (42) in einer elektrischen Anlage (1), die an einem Anschlusspunkt (21) an ein Verteilungsnetz elektrischer Energie (2) angeschlossen ist, wobei die elektrische Anlage (1) aufweist:

- mindestens einen Wandler (4), der einerseits mit der variablen Quelle elektrischer Energie (42) und andererseits mit dem Anschlusspunkt (21) verbunden ist, wobei der Wandler (4) eingerichtet ist, um die von der Quelle elektrischer Energie (42) gelieferte Energie umzuwandeln und eine erste steuerbare aktive Leistung (Pinv), eine erste steuerbare reaktive Leistung (Qinv) am Anschlusspunkt (21) zu liefern, und
- eine elektrische Last (3), die mit dem Anschlusspunkt (21) verbunden ist und eine zweite aktive Leistung (Pload) und eine zweite reaktive Leistung (Qload) verbraucht,

wobei das Verteilungsnetz elektrischer Energie (2) der elektrischen Anlage (1) eine dritte aktive Leistung (Pnet) und eine dritte reaktive Leistung (Qnet) mit einem Netzleistungsfaktor (PFnet) liefert, wobei das Verfahren **dadurch gekennzeichnet ist, dass** es einen Schritt der Bestimmung der ersten aktiven Leistung (Pinv) und der ersten reaktiven Leistung (Qinv) aufweist, die der Wandler (4) liefern muss, abhängig von der zweiten aktiven Leistung (Pload) und der zweiten reaktiven Leistung (Qload), damit der Netzleistungsfaktor (PFnet) höher als ein oder gleich einem vorbestimmten Zielleistungsfaktor (PFtarg) ist.

**2.** Verfahren nach Anspruch 1, **dadurch gekennzeichnet, dass** die erste aktive Leistung (Pinv) und die erste reaktive Leistung (Qinv) außerdem bestimmt werden, um die dritte aktive Leistung (Pnet) zu minimieren oder die erste aktive Leistung (Pinv) zu maximieren.

**3.** Verfahren nach einem der Ansprüche 1 oder 2, **dadurch gekennzeichnet, dass** der Wandler (4) die erste aktive Leistung (Pinv) und die erste reaktive Leistung (Qinv) mit einem Wandlerleistungsfaktor (PFinv) höher als ein oder gleich einem vordefinierten minimalen Wandlerleistungsfaktor (PFinv_min) liefert.

**4.** Verfahren nach dem vorhergehenden Anspruch, **dadurch gekennzeichnet, dass** der Wandler (4) eine erste maximale reaktive Leistung (Qinv) liefert, wenn der Wandlerleistungsfaktor (PFinv) gleich dem minimalen Wandlerleistungsfaktor (PFinv_min) ist.

**5.** Verfahren nach einem der Ansprüche 3 oder 4, **dadurch gekennzeichnet, dass** das Netz elektrischer Energie (2) eine dritte minimale aktive Leistung (Pnet_min) an die elektrische Anlage (1) liefert, wenn die elektrische Anlage (1) in der Lage ist, elektrische Energie in einem Eigenverbrauchmodus zu liefern.

**6.** Verfahren nach dem vorhergehenden Anspruch, **dadurch gekennzeichnet, dass**:

- die vom Wandler (4) gelieferte erste aktive Leistung (Pinv) gleich der Differenz zwischen der von der Last verbrauchten zweiten aktive Leistung (Pload) und der vom Verteilungsnetz elektrischer Energie (2) gelieferten minimalen dritten aktiven Leistung (Pnet_min) ist,
- der Wandlerleistungsfaktor (PFinv) höher als der oder gleich dem minimalen Leistungsfaktor (PFiv_min) ist, und
- die dritte reaktive Leistung (Qnet) minimiert oder die erste reaktive Leistung (Qinv) maximiert wird.

**7.** Verfahren nach einem der vorhergehenden Ansprüche, **dadurch gekennzeichnet, dass** die von der Laste (3) verbrauchte zweite aktive Leistung (Pload) und zweite reaktive Leistung (Qload) während einer Folge ermittelt werden, die aufweist:

- einen Schritt (131) der Steuerung des Wandlers (4), um eine erste aktive Leistung (Pinv) Null und eine erste reaktive Leistung (Qinv) Null zu liefern,
- einen Schritt der Messung (132) der dritten aktiven Leistung (Pnet) und der dritten reaktiven Leistung (Qnet), und
- einen Schritt der Bestimmung (133) der zweiten aktiven Leistung (Pload) und der zweiten reaktiven Leistung (Qload), wobei die zweite aktive Leistung (Pload) gleich der dritten aktiven Leistung (Pnet) und die zweite reaktive Leistung (Qload) gleich der dritten reaktiven Leistung (Qnet) ist.

**8.** Steuervorrichtung (5) eines Wandlers elektrischer Energie (4) in einer elektrischen Anlage (1), die mit einem elektrischen Netzwerk (2) an einem Anschlusspunkt (21) verbunden ist, wobei die elektrische Anlage (1) aufweist:

- mindestens einen Wandler elektrischer Energie (4), der einerseits mit dem Verbindungspunkt (21) und andererseits mit mindestens einer Quelle elektrischer Energie (42) verbunden ist, um die von der Energiequelle (42) gelieferte Energie umzuwandeln, wobei der Wandler (4) eine erste aktive Leistung (Pinv) und eine erste reaktive Leistung (Qinv) mit einem Wandlerleistungsfaktor (PFinv) liefert,
- mindestens eine mit dem Verbindungspunkt (21) verbundene elektrische Last (3), die eine zweite aktive Leistung (Pload) und eine zweite reaktive Leistung (Qload) verbraucht,

wobei die Steuervorrichtung (5) **dadurch gekennzeichnet ist, dass** sie aufweist:

- einen ersten Messkreis (51), um entweder eine dritte aktive Leistung (Pnet) und eine dritte reaktive Leistung (Qnet) oder eine dritte Scheinleistung (Snet) und einen Netzleistungsfaktor (PFnet) am Anschlusspunkt (21) zu messen,
- einen zweiten Messkreis (52), um entweder die erste aktive Leistung (Pinv) und die zweite reaktive Leistung (Qinv) oder eine erste Scheinleistung (Sinv) und den Wandlerleistungsfaktor (PFinv) zu messen, und
- einen Steuerkreis (53) verbunden mit:
- dem ersten Messkreis (51), um einen Messwert der dritten aktiven Leistung (Pnet), der dritten reaktiven Leistung (Qnet), der dritten Scheinleistung (Snet) und des Netzleistungsfaktors (PFnet) zu empfangen,
- dem zweiten Messkreis (52), um einen Messwert der ersten aktiven Leistung (Pinv), der ersten reaktiven Leistung (Qinv), der ersten Scheinleistung (Sinv) und des Wandlerleistungsfaktors (PFinv) zu empfangen, die vom Wandler (4) geliefert werden, und

- dem Wandler elektrischer Energie (4), um die erste aktive Leistung (Pinv) und die erste reaktive Leistung (Qinv) zu steuern, die der Wandler (4) liefern soll,

wobei der Steuerkreis (53) eingerichtet ist, um das Verfahren nach einem der Ansprüche 1 bis 7 auszuführen und an den Wandler (4) einen Liefersollwert aktiver Leistung CmdPinv und reaktiver Leistung CmdQinv entsprechend der ersten aktiven Leistung (Pinv) und der ersten reaktiven Leistung (Qinv) zu übertragen, die der Wandler (4) liefern soll.

9. Elektrische Anlage (1), die mit einem elektrischen Netzwerk (2) an einem Anschlusspunkt (21) verbunden ist, wobei die elektrische Anlage (1) aufweist:

- mindestens eine variable Quelle elektrischer Energie (42),
- mindestens einen Wandler elektrischer Energie (4), der einerseits mit dem Verbindungspunkt (21) und andererseits mit der variablen Quelle elektrischer Energie (42) verbunden ist, um die von der Energiequelle (42) gelieferte Energie in elektrische Energie zu verwandeln, die am Verbindungspunkt (21) verfügbar ist, und
- mindestens eine elektrische Last (3), die mit dem Verbindungspunkt (21) verbunden ist,

wobei die elektrische Anlage (1) **dadurch gekennzeichnet ist, dass** sie eine Steuervorrichtung (5) des Wandlers elektrischer Energie (4) nach dem vorhergehenden Anspruch aufweist.

10. Elektrische Anlage (1) nach dem vorhergehenden Anspruch, **dadurch gekennzeichnet, dass** die variable Quelle elektrischer Energie (42) aus mindestens einem Photovoltaikpaneel besteht.

## Claims

1. Method for optimizing the delivery of energy by a variable electrical energy source (42) in an electrical installation (1) connected to an electrical energy distribution network (2) at a connection point (21), said electrical installation (1) comprising:

- at least one converter (4), connected on the one hand to the variable electrical energy source (42) and on the other hand to the connection point (21), said converter (4) being designed to convert the energy delivered by the electrical energy source (42) and deliver a controllable first active power (Pinv) and a controllable first reactive power (Qinv) at the connection point (21), and
- an electrical load (3), connected to the connection point (21), and which consumes a second active power ($P_{load}$) and a second reactive power ($Q_{load}$),

the electrical energy distribution network (2) delivering a third active power ($P_{net}$) and a third reactive power (Qnet) with a network power factor (PFnet) to the electrical installation (1),
the method being **characterized in that** it comprises a step of determining the first active power (Pinv) and the first reactive power (Qinv) which the converter (4) must deliver depending on the second active power ($P_{load}$) and the second reactive power ($Q_{load}$), in order for the network power factor ($PF_{net}$) to be greater than or equal to a predetermined target power factor ($PF_{targ}$).

2. Method according to Claim 1, **characterized in that** the first active power (Pinv) and the first reactive power (Qinv) are determined, furthermore, so as to minimize the third active power (Pnet) or maximize the first active power (Pinv).

3. Method according to either of Claims 1 and 2, **characterized in that** the converter (4) delivers the first active power (Pinv) and the first reactive power (Qinv) with a converter power factor (PFinv) greater than or equal to a predefined minimum converter power factor (PFinv_min).

4. Method according to the preceding claim, **characterized in that** the converter (4) delivers a maximum first reactive power (Qinv) when the converter power factor (PFinv) is equal to the minimum converter power factor (PFinv_min).

5. Method according to either of Claims 3 and 4, **characterized in that** the electrical energy network (2) delivers a minimum third active power (Pnet_min) to said electrical installation (1) when the electrical installation (1) is capable of delivering electrical energy in a self-consumption mode.

**6.** Method according to the preceding claim, **characterized in that**:

- the first active power (Pinv) delivered by the converter (4) is equal to the difference between the second active power ($P_{load}$) consumed by the load and the minimum third active power (Pnet_min) delivered by the electrical energy distribution network (2),
- the converter power factor (PFinv) is greater than or equal to the minimum power factor (PFinv_min), and
- the third reactive power (Qnet) is minimized or the first reactive power (Qinv) is maximized.

**7.** Method according to one of the preceding claims, **characterized in that** the second active power ($P_{load}$) and the second reactive power ($Q_{load}$) consumed by the load (3) are evaluated in a sequence comprising:

- a step (131) of controlling the converter (4) so as to deliver a zero first active power (Pinv) and a zero first reactive power (Qinv),
- a step (132) of measuring the third active power ($P_{net}$) and the third reactive power (Qnet), and
- a step (133) of determining the second active power ($P_{load}$) and the second reactive power ($Q_{load}$),the second active power ($P_{load}$) being equal to the third active power (Pnet) and the second reactive power ($Q_{load}$) being equal to the third reactive power (Qnet).

**8.** Device (5) for controlling an electrical energy converter (4) in an electrical installation (1) connected to an electrical network (2) at a connection point (21), said electrical installation (1) comprising:

- at least one electrical energy converter (4) connected on the one hand to the connection point (21), and connected on the other hand to, at least, one electrical energy source (42) so as to convert the energy delivered by said energy source (42), said converter (4) delivering a first active power (Pinv) and a first reactive power (Qinv), with a converter power factor (PFinv),
- at least one electrical load (3), connected to the connection point (21), which consumes a second active power ($P_{load}$) and a second reactive power ($Q_{load}$),

which control device (5) is **characterized in that** it comprises:

- a first measuring circuit (51) for measuring either a third active power ($P_{net}$) and a third reactive power (Qnet) or a third apparent power ($S_{net}$) and a network power factor (PFnet) at the connection point (21),
- a second measuring circuit (52) for measuring either the first active power (Pinv) and the first reactive power (Qinv) or a first apparent power (Sinv) and the converter power factor (PFinv), and
- a control circuit (53) connected:
- to the first measuring circuit (51) so as to receive a measurement of the third active power (Pnet), of the third reactive power (Qnet), of the third apparent power (Snet) and of the network power factor (PFnet),
- to the second measuring circuit (52) so as to receive a measurement of the first active power (Pinv), of the first reactive power (Qinv), of the first apparent power (Sinv) and of the converter power factor (PFinv) which are delivered by the converter (4), and
- to the electrical energy converter (4) so as to control the first active power (Pinv) and the first reactive power (Qinv) which said converter (4) must deliver,

said control circuit (53) being designed to carry out the method according to any one of Claims 1 to 7 and to transmit to the converter (4) an instruction to deliver active power CmdPinv and reactive power CmdQinv corresponding to the first active power (Pinv) and to the first reactive power (Qinv) which said converter (4) must deliver.

**9.** Electrical installation (1) connected to an electrical network (2) at a connection point (21), said electrical installation (1) comprising:

- at least one variable electrical energy source (42),
- at least one electrical energy converter (4) connected on the one hand to the connection point (21), and connected on the other hand to the variable electrical energy source (42) so as to convert the energy delivered by said energy source (42) into electrical energy available at the connection point (21), and
- at least one electrical load (3), connected to the connection point (21),

which electrical installation (1) is **characterized in that** it comprises a device (5) for controlling the electrical energy converter (4) according to the preceding claim.

**10.** Electrical installation (1) according to the preceding claim, **characterized in that** the variable electrical energy source (42) is composed of at least one photovoltaic panel.

[Fig. 1]

FIG. 1

[Fig. 2]

Pnet = 83 kW
Qnet = 33 kVAr
PFnet= 0,93

Pinv = 117 kW
Qinv = 26 kVAr

Pload = 200 kW
Qload = 60 kVAr
PFload= 0,96

**FIG. 2**

[Fig. 3]

**FIG. 3**

[Fig. 4A]

FIG. 4A

[Fig. 4B]

FIG. 4B

[Fig. 4C]

FIG. 4C

[Fig. 4D]

**FIG. 4D**

[Fig. 4E]

**FIG. 4E**

[Fig. 5A]

110 — PFtarg

120 — Acquisition
Pinv, Qinv, Pnet, Qnet

130 — Pload, Qload

140 — Calcul Pinv, Qinv, PFinv

150 — Non / PFinv ≥ PFinv_min ? / Oui

160 — calcul Pinv, Qinv avec
PFinv_min

vers étape 170

**FIG. 5A**

EP 3 672 012 B1

[Fig. 5B]

FIG. 5B

[Fig. 6]

**131**

$$P_{inv} = 0, \quad Q_{inv} = 0$$

**132**

Mesure

$$P_{net}, \quad Q_{net}$$

**133**

$$P_{load} = P_{net}, \quad Q_{load} = Q_{net}$$

FIG. 6

[Fig.7]

$P_{net}$ = 200 kW
$Q_{net}$ = 60 kVAr
$PF_{net}$= 0,96

Source d'énergie — 4

$P_{inv}$ = 0 kW
$Q_{inv}$ = 0 kVAr

$P_{load}$ = 200 kW
$Q_{load}$ = 60 kVAr
$PF_{load}$= 0,96

charge — 3

$P_{net}$ = 80 kW
$Q_{net}$ = 60 kVAr
$PF_{net}$ = 0,8

Source d'énergie — 4

$P_{inv}$ = 120 kW
$Q_{inv}$ = 0 kVAr

$P_{load}$ = 200 kW
$Q_{load}$ = 60 kVAr
$PF_{load}$= 0,96

charge — 3

**Art antérieur**

**FIG. 7**

**EP 3 672 012 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017214337 A1
- WO 2012125278 A2
- US 9806665 B2
- EP 3029797 A1
- WO 2007060328 A1